# EUROPÄISCHE PATENTSCHRIFT

(11) **EP 1 508 704 B1**
(45) Veröffentlichungstag und Bekanntmachung des Hinweises auf die Patenterteilung: **14.06.2006**
(21) Anmeldenummer: 04012532.0
(22) Anmeldetag: 27.05.2004
(51) Int. Cl.: F16B 5/00, E05D 5/02

(54) **Profilverbindung**
Profile connection
Raccordement de profil

(30) Priorität: 19.08.2003 DE 10338011
(43) Veröffentlichungstag der Anmeldung: 23.02.2005
(73) Patentinhaber: HAPPICH Fahrzeug- und Industrieteile GmbH, 42285 Wuppertal (DE)
(72) Erfinder: Van Ooy, Andreas, 42579 Heiligenhaus (DE)

(56) Entgegenhaltungen:
- DE-A- 1 817 951
- DE-A- 2 248 217
- DE-B- 1 250 687
- US-A- 5 117 601

## Beschreibung

Die Erfindung bezieht sich auf eine Profilverbindung zur Verbindung von wenigstens zwei Profilelementen, insbesondere AL-Profilelementen untereinander, wobei zur Verbindung der wenigstens zwei Profilelemente eine Schraubverbindung vorgesehen ist mit einem zur Aufnahme einer Schraube ausgebildeten Schraubkanal, entsprechend der Merkmale des ersten Teils von Auspruch 1 (DE 1 817 951 A).

Aus dem Stand der Technik sind verschiedene Profilverbindungen zur Verbindung von wenigstens zwei Profilelementen, insbesondere AL-Profilelementen untereinander bekannt. Diese Art von Profilverbindungen sind dabei bei allen Verbindungen von zwei oder mehr beispielsweise AL-Profilen miteinander anwendbar, wobei eine Verwendung bei allen z. B. AL-Profilverbindungen im Fahrzeug, Schienenfahrzeug, Apparatebau, Armaturenbau, Vorrichtungsbau oder dgl. vorgesehen ist. Es werden dabei bei den bekannten Profilverbindungen zumeist zwei Profilelemente mit einem Schraubkanal auf der einen und einer runden Stanzung auf der anderen Seite durch eine Schraube miteinander verbunden. Bezüglich des Standes der Technik sei dazu beispielhaft auf die DE 299 18 744 U verwiesen, diese Druckschrift bezieht sich auf eine Gepäckablage, insbesondere für Schienenfahrzeuge, bei der ein Rahmen dieser Gepäckablage auf der Halterungsseite verbreitert ausgebildet ist und auf diesem verbreiterten Abschnitt mittels Schrauben an einem Hohlprofil befestigt ist. Es weisen derartige Profilverbindungen eine Reihe von Nachteilen auf, die sich wie folgt zusammenfassen lassen:

Da das mit dem Schraubkanal des ersten Profilelementes zusammenwirkende zweite Profilelement im Bereich dieses Schraubkanals eine Stanzung für den Durchtritt der Schraube aufweisen muss, ergibt sich hier der zusätzliche Fertigungsschritt des Stanzens an diesem Profilelement. Weiterhin ist nach dem Lösen der Schraube bei den bekannten Profilverbindungen der Schraubkanal in diesem Bereich nur noch bedingt nutzbar, da sich hier ein lokaler Verschleiß dieses Schraubkanals ergibt. Hieraus folgt dann entweder eine verminderte Belastbarkeit der Schraubverbindung oder es wird eine Stanzung an einer anderen Stelle des Profilelementes erforderlich, was im Bereich der Montage nur mit einem erheblichen Zeitaufwand zu realisieren ist. Weiterhin nachteilig ist bei den bekannten Profilverbindungen, dass die einzelnen Profilelemente aufgrund der Toleranz der Stanzung bzw. des Schraubendurchmessers im montierten Zustand einer gewissen Schwankung unterworfen sind.

Ausgehend von den bekannten Profilverbindungen liegt dem gemäß der vorliegenden Erfindung die Aufgabe zugrunde, die bekannten Profilverbindungen unter Beibehaltung der bisherigen Vorteile in der Weise zu verbessern bzw. weiter zu entwickeln, dass die zuvor erwähnten Nachteile der bekannten Profilverbindungen vermieden werden, wobei insbesondere eine Profilverbindung geschaffen werden soll ohne einen zusätzlichen Fertigungsschritt für Stanzen, Bohren oder dgl., es soll dabei die gewünschte Profilverbindung auch im Wesentlichen ohne das Auftreten von Verschleiß wieder verschraubbar sein. Weiterhin soll bei der gewünschten Profilverbindung die Justierung bei der Verschraubung verbessert werden, um eine passgenaue Verbindung zu erhalten. Die gewünschte Anordnung soll dabei nicht nur einfach und wirtschaftlich herstellbar, sondern auch einfach zu handhaben sein und hinsichtlich ihrer sonstigen Funktionseigenschaften den bestehenden Anforderungen genügen.

Die Aufgabe wird erfindungsgemäß durch die Merkmale des Anspruch 1 gelöst. Auf diese Weise wird erstmalig mit einfachen Mitteln die Möglichkeit geschaffen, eine Profilverbindung ohne den zusätzlichen Fertigungsschritt für Stanzen, Bohren oder dgl. vorzusehen, wobei dabei die Schraube für den Schraubkanal an jeder beliebigen Stelle positionierbar ist, so dass beispielsweise Lochbildzeichnungen entfallen. Die Schraube ist außerdem aus diesem zweiteilig ausgebildeten Schraubkanal lösbar, und kann rechts- oder linksherum ohne einen Festigkeitsverlust der Verbindung wieder verschraubt werden. Im Weiteren besitzt bei der erfindungsgemäßen Profilverbindung die Schraube die Funktion eines Keiles, der beide Schraubkanalhälften in gegensätzliche Richtungen drückt, wobei in noch zu erläuternder Weise zusätzliche Stützelemente vorgesehen sein können. Somit ist immer ein gleiches Spaltmaß gewährleistet, so dass die Profile immer exakt positioniert werden können. Die erfindungsgemäße Profilverbindung ist dabei nicht nur konstruktiv einfach aufgebaut und damit kostengünstig herstellbar, sondern sie ist auch einfach in der Handhabung und genügt auch hinsichtlich ihrer sonstigen Funktionseigenschaften vollkommen den bestehenden Anforderungen.

Bei der bevorzugten Ausführungsform der vorliegenden Erfindung ist der erste Teil des zweiteiligen Schraubkanals an dem ersten Profilelement und der zweite Teil des zweiteiligen Schraubkanals an dem zweiten Profilelement angeformt. Es empfiehlt sich dabei in bevorzugter Ausgestaltung, dass an den beiden Profilelementen jeweils etwa eine Hälfte des zweiteiligen Schraubkanals angeformt ist.

Nach einem weiteren Ausgestaltungsmerkmal der vorliegenden Erfindung ist vorgesehen, dass an dem ersten Profilelement gegenüberliegend zu dem ersten Teil des Schraubkanals ein den zweiten Teil des Schraubkanals an dem zweiten Profilelement hintergreifendes Stützelement ausgebildet ist. Durch dieses Stützelement an dem ersten Profilelement wird verhindert, dass die Schraubkanalhälfte an dem anderen Profilelement durch das Hineindrehen der Schraube zur Seite gedrückt wird. Es empfiehlt sich dabei, dass an der Innenseite dieses Stützelementes eine Ausnehmung zur Aufnahme einer an der damit in Wirkverbindung stehenden Seite des zweiten Teiles des Schraubkanals angeordneten Rastnase ausgebildet ist. Über diese Mittel können die beiden Profilelemente in eine vorgesehene, vorbestimmte Position überführt werden.

Nach einem weiteren Ausgestaltungsmerkmal der vorliegenden Erfindung ist das Stützelement im Bezug auf die Mittelachse des Schraubkanals leicht schräg angeordnet, wodurch die Keilwirkung bei der Funktion noch unterstützt wird. Es beträgt dabei die Schräge des Stützelements im Bezug auf die Mittelachse des Schraubkanals bei einer bevorzugten Ausführung etwa 5°.

Nach einem weiteren Ausgestaltungsmerkmal der vorliegenden Erfindung ist vorgesehen, dass der zweiteilige Schraubkanal zur im Wesentlichen vollständigen Versenkbarkeit der Schraube ausgebildet ist. Eine derartige Ausbildung ist sowohl in optischer als auch in funktionstechnischer Hinsicht vorteilhaft.

Nach einem letzten Merkmal der vorliegenden Erfindung ist vorgesehen, dass die Schraubverbindung rechts- oder linksverschraubbar ausgebildet ist.

Die Erfindung ist in den Figuren der Zeichnung in einem Ausführungsbeispiel dargestellt. Es zeigen:
- Fig. 1: eine schematische, vereinfachte Schnittansicht einer Profilanordnung mit einer erfindungsgemäßen Profilverbindung und einer herkömmlichen Profilverbindung, vorgesehen beispielsweise für eine Verwendung in Verbindung mit Gepäckablagen,
- Fig. 2: die Darstellung der Profilanordnung gemäß Fig. 1 in einer perspektivischen Ansicht,
- Fig. 3: die Einzelheit B aus der Fig. 1 mit einer erfindungsgemäß ausgebildeten Profilverbindung mit eingeschraubter Schraube,
- Fig. 4: die Ansicht gemäß Fig. 3 bei entfernter Schraube,
- Fig. 5: die Einzelheit A aus der Fig. 1 mit einer herkömmlichen Profilverbindung mit eingesetzter Schraube,
- Fig. 6: die Ansicht gemäß Fig. 5 bei entfernter Schraube.

Die erfindungsgemäße Profilverbindung ist generell mit 10 bezeichnet. Die Profilverbindung 10 dient zur Verbindung von wenigstens zwei mit 11 und 12 bezeichneten Profilelementen, insbesondere AL-Profilelementen untereinander. Die erfindungsgemäße Profilverbindung 10 ist vorgesehen für alle Verbindungen von zwei oder mehr AL-Profilen miteinander, wobei eine Anwendung bei allen AL-Profilverbindungen im Fahrzeug, Schienenfahrzeug, Apparatebau, Armaturenbau, Vorrichtungsbau oder dgl. vorgesehen ist. Als Anwendungsbeispiel sei hierzu beispielsweise die Verwendung in Verbindung mit Gepäckablagen für Großraumfahrzeuge genannt.

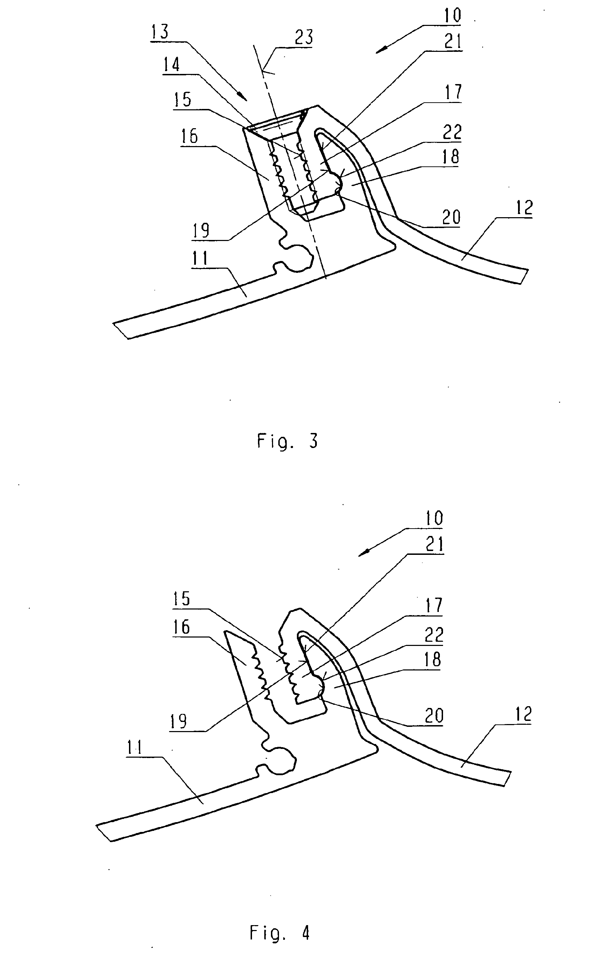

Die erfindungsgemäße Profilverbindung 10 ist derart ausgebildet, dass zur Verbindung der wenigstens zwei Profilelemente 11 und 12 eine mit 13 bezeichnete Schraubverbindung vorgesehen ist mit einem zur Aufnahme einer Schraube 14 ausgebildeten Schraubkanal 15. Es ist dabei, siehe dazu insbesondere die Figuren 3 und 4 der Zeichnung, erfindungsgemäß vorgesehen, dass der zur Aufnahme einer Schraube 14 ausgebildete Schraubkanal 15 zweiteilig ausgebildet ist. Durch diese zweiteilige Ausbildung des Schraubkanals 15 ergibt sich insbesondere der Vorteil, dass die Profilverbindung 10 ohne einen zusätzlichen Fertigungsschritt für Stanzen, Bohren oder dgl. hergestellt werden kann. Es ist dabei die Schraube 14 an jeder beliebigen Stelle positionierbar, so dass z. B. Lochbildzeichnungen entfallen. Die Schraube 14 ist dabei lösbar ausgebildet, und kann rechts- oder linksdrehend ohne einen Festigkeitsverlust für die Verbindung wieder verschraubt werden. Die Schraube 14 besitzt dabei die Funktion eines Keiles, der beide Schraubkanalhälften in gegensätzliche Richtungen drückt, wobei die eine Schraubkanalhälfte in noch darzustellender Weise zusätzlich gegen Stützelemente gedrückt wird. Somit ist hier immer ein gleiches Spaltmaß gewährleistet, so dass die Profilelemente 1 und 12 immer exakt positioniert werden.

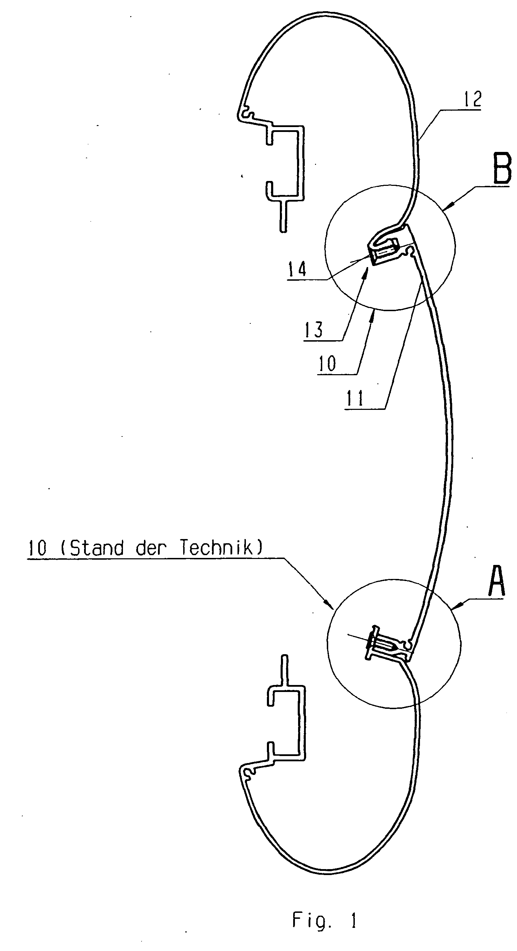

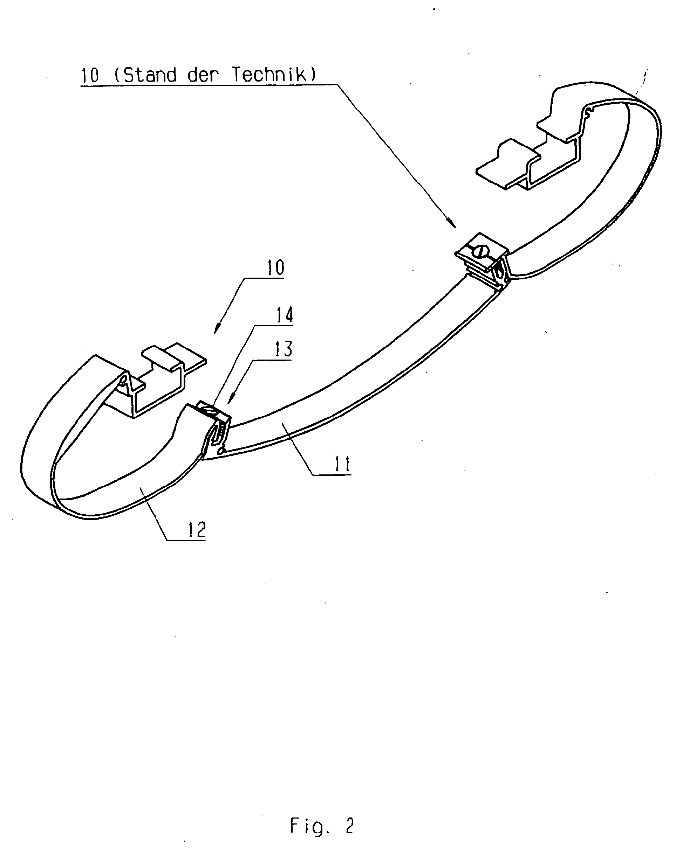

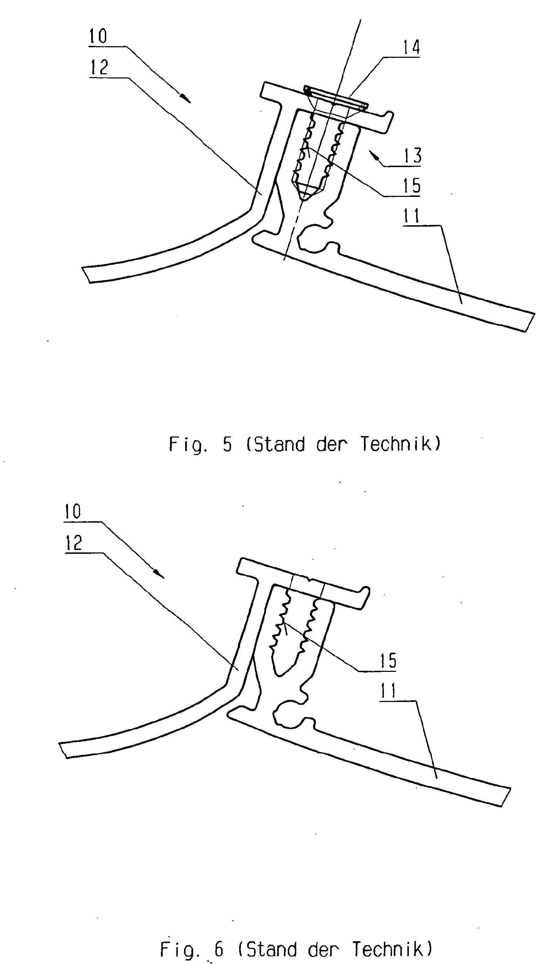

Es ist dazu in der Fig. 1 der Zeichnung eine Profilanordnung dargestellt, mit einer erfindungsgemäßen Profilverbindung 10 gemäß der Einzelheit B und mit einer herkömmlichen Profilverbindung gemäß der Einzelheit A. In der Fig. 1 ist dazu eine Schnittansicht dieser Profilanordnung und in der Fig. 2 eine perspektivische Ansicht dieser Profilanordnung gezeigt. Weiterhin ist die Einzelheit B mit der erfindungsgemäßen Profilverbindung 10 in den Fig. 3 und 4 der Zeichnung gezeigt, während in den Figuren 5 und 6 der Zeichnung die herkömmliche Profilverbindung 10 gemäß Einzelheit A aus der Fig. 1 dargestellt ist.

Bei der erfindungsgemäßen Profilverbindung 10 ist bei dem dargestellten Ausführungsbeispiel vorgesehen, siehe die Figuren 3 und 4 der Zeichnung, dass der erste Teil 16 des zweiteiligen Schraubkanals 15 an dem ersten Profilelement 11 und der zweite Teil 17 des zweiteiligen Schraubkanals 15 an dem zweiten Profilelement 12 angeformt ist. Es kann dabei an den beiden Profilelementen 11 und 12 jeweils etwa eine Hälfte des zweiteiliggen Schraubkanals 15 angeformt sein.

Bei dem Ausführungsbeispiel gemäß den Fig. 3 und 4 ist an dem ersten Profilelement 11 gegenüberliegend zu dem ersten Teil 16 des Schraubkanals 15 ein den zweiten Teil 17 des Schraubkanals 15 an dem zweiten Profilelement 12 hintergreifendes Stützelement 18 ausgebildet. Durch dieses Stützelement 18 wird verhindert, dass der zweite Teil 17 des Schraubkanals 15 durch die Schraube 14 zur Seite gedrückt wird. Es ist dabei an der Innenseite 19 des Stützelements 18 eine Ausnehmung 20 zur Aufnahme einer an der damit in Wirkverbindung stehenden Seite 21 des zweiten Teils 17 des Schraubkanals 15 angeordneten Rastnase 22 ausgebildet. Durch diese Ausbildung können die beiden Profilelemente 1 und 12 in eine vorgesehene, vorbestimmte Position gebracht werden.

Das Stützelement 18 ist, siehe dazu die Fig. 3 der Zeichnung, in Bezug auf die Mittelachse 23 des Schraubkanals 15 leicht schräg angeordnet, es beträgt dabei bei dem dargestellten Ausführungsbeispiel die Schräge dieses Stützelementes 18 in Bezug auf die Mittelachse 23 des Schraubkanals 15 etwa 5°.

Bei dem dargestellten Ausführungsbeispiel ist ferner, siehe dazu wieder z. B. die Fig. 3 der Zeichnung, der zweiteilige Schraubkanal 15 zur im Wesentlichen vollständigen Versenkbarkeit der Schraube 14 ausgebildet. Eine derartige Ausbildung ist sowohl in optischer als auch in funktionstechnischer Hinsicht vorteilhaft.

Die Schraubverbindung 13 der erfindungsgemäßen Profilverbindung 10 kann rechts- oder linksverschraubbar ausgebildet sein, d. h. die Schraube 14 ist lösbar und rechts- oder linksdrehend von der alten Position wieder verschraubbar ohne einen Festigkeitsverlust für die Verbindung.

Mit der erfindungsgemäßen Profilverbindung 10 wird erstmalig eine Profilverbindung ohne den zusätzlichen Fertigungsschritt für ein Stanzen, Bohren oder dgl. geschaffen, wobei durch die erfindungsgemäße zweiteilige Ausbildung des Schraubkanals 15 auch eine Wiederverschraubung der Schraubverbindung 13 im Wesentlichen ohne einen Verschleiß ermöglicht wird. Die Profilelemente 11 und 12 können also demontiert und die Schrauben 14 an jeder anderen Stelle wieder montiert werden. Ein Materialaufwand besteht aber nicht, somit bleibt das Profilgewicht z. B. bezogen auf einen Meter unverändert. Mit der erfindungsgemäßen Profilverbindung 10 wird außerdem die Justierung beim Zusammenschrauben verbessert, so dass sich eine passgenaue Verbindung ergibt.

Wie bereits erwähnt, sind die dargestellten Ausführungsformen nur beispielsweise Verwirklichungen der Erfindung, diese sind nicht darauf beschränkt, es sind vielmehr noch mancherlei Abänderungen und Ausbildungen möglich. So sind insbesondere Abwandlungen des dargestellten Schraubkanals 15 der Schraubverbindung 13 der erfindungsgemäßen Profilverbindung 10 möglich, sowie auch eine Verwendung von andersartigen Schrauben 14. Weiterhin vorgesehen ist selbstverständlich die Verwendung von andersartigen Profilelementen 11 und 12, bezüglich der Abwandlung der Schraubverbindung 13 ist z. B. denkbar, unterhalb des zweiten Teiles 17 des Schraubkanals 15 benachbart zu dem Stützelement 18 eine in den Figuren der Zeichnung nicht dargestellte Führungsnase für diesen zweiten Teil 17 des Schraubkanals 15 auszubilden.

### Bezugszeichenliste:

- 10: Profiiverbindung
- 11: erstes Profilelement
- 1 2: zweites Profilelement
- 13: Schraubverbindung
- 14: Schraube (von 13)
- 15: Schraubkanal (von 13)
- 16: erster Teil (von 15)
- 17: zweiter Teil (von 15)
- 18: Stützelement (an 16 für 17)
- 19: Innenseite (von 18)
- 20: Ausnehmung (an 19)
- 21: Seite (von 17 an 19)
- 22: Rastnase (an 21)
- 23: Mittelachse (von 15)

## Patentansprüche

1. Profilverbindung (10) zur Verbindung von wenigstens zwei Profilelementen (11), (12), insbesondere AL-Profilelementen untereinander, wobei zur Verbindung der wenigstens zwei Profilelemente (11), (12) eine Schraubverbindung (13) vorgesehen ist mit einem zur Aufnahme einer Schraube (14) ausgebildeten Schraubkanal (15), wobei dieser zur Aufnahme einer Schraube (14) ausgebildete Schraubkanal (15) zweiteilig ausgebildet ist, **dadurch gekennzeichnet, dass** der erste Teil (16) des zweiteiligen Schraubkanals (15) an dem ersten Profilelement (11) und der zweite Teil (17) des zweiteiligen Schraubkanals (15) an dem zweiten Profilelement (12) angeformt ist und dass an dem ersten Profilelement (11) gegenüberliegend zu dem ersten Teil (16) des Schraubkanals (15) ein den zweiten Teil (17) des Schraubkanals (15) an dem zweiten Profilelement (12) hintergreifendes Stützelement (18) ausgebildet ist.

2. Profilverbindung nach Anspruch 1, **dadurch gekennzeichnet, dass** an den beiden Profilelementen (11), (12) jeweils etwa eine Hälfte des zweiteiligen Schraubkanals (15) angeformt ist.

3. Profilverbindung nach Anspruch 1 oder 2, **dadurch gekennzeichnet, dass** an der Innenseite (19) des Stützelements (18) eine Ausnehmung (20) zur Aufnahme einer an der damit in Wirkverbindung stehenden Seite (21) des zweiten Teiles (17) des Schraubkanals (15) angeordneten Rastnase (22) ausgebildet ist.

4. Profilverbindung nach einem der Ansprüche 1 bis 3, **dadurch gekennzeichnet, dass** das Stützelement (18) in Bezug auf die Mittelachse (23) des Schraubkanals (15) leicht schräg angeordnet ist.

5. Profilverbindung nach Anspruch 4, **dadurch gekennzeichnet, dass** die Schräge des Stützelements (18) in Bezug auf die Mittelachse (23) des Schraubkanals (15) etwa 5° beträgt.

6. Profilverbindung nach einem der Ansprüche 1 bis 5, **dadurch gekennzeichnet, dass** der zweiteilige Schraubkanal (15) zur im Wesentlichen vollständigen Versenkbarkeit der Schraube (14) ausgebildet ist.

7. Profilverbindung nach einem der Ansprüche 1 bis 6, **dadurch gekennzeichnet, dass** die Schraubverbindung (13) rechts- oder linksverschraubbar ausgebildet ist.

## Claims

1. Profile connection (10) for interconnecting at least two profile elements (11), (12), in particular aluminium profile elements, a screw connection (13), with a screw channel (15) designed for receiving a screw (14), being provided for connecting the at least two profile elements (11), (12), this screw channel (15) designed for receiving a screw (14) being of two part design, **characterized in that** the first part (16) of the two-part screw channel (15) is formed on the first profile element (11) and the second part (17) of the two-part screw channel (15) is formed on the second profile element (12) and **in that** a support element (18), which engages behind the second part (17) of the screw channel (15) on the second profile element (12), is designed on the first profile element (11) opposite the first part (16) of the screw channel (15).

2. Profile connection according to Claim 1, **characterized in that** approximately half of the two-part screw channel (15) is formed on each of the two profile elements (11), (12).

3. Profile connection according to Claim 1 or 2, **characterized in that** a recess (20) for receiving a catch nose (22) arranged on that side (21) of the second part (17) of the screw channel (15) interacting with the inner side (19) of the support element (18) is designed on the inner side.

4. Profile connection according to one of Claims 1 to 3, **characterized in that** the support element (18) is arranged slightly at an angle in relation to the central axis (23) of the screw channel (15).

5. Profile connection according to Claim 4, **characterized in that** the angle of the support element (18) in relation to the central axis (23) of the screw channel (15) is approximately 5°.

6. Profile connection according to one of Claims 1 to 5, **characterized in that** the two-part screw channel (15) is designed for essentially complete countersinkability of the screw (14).

7. Profile connection according to one of Claims 1 to 6, **characterized in that** the screw connection (13) is designed to be screwable together to the right or to the left.

## Revendications

1. Raccordement de profil (10) pour le raccordement d'au moins deux éléments de profil (11), (12), en particulier des éléments de profil en aluminium l'un à l'autre, dans lequel il est prévu pour le raccordement des au moins deux éléments de profil (11), (12), un assemblage vissé (13) avec un canal de vis (15) configuré pour recevoir une vis (14), dans lequel ce canal de vis (15) configuré pour recevoir une vis (14) est réalisé en deux parties, **caractérisé en ce que** la première partie (16) du canal de vis en deux parties (15) est formée sur le premier élément de profil (11) et la deuxième partie (17) du canal de vis en deux parties (15) est formée sur le deuxième élément de profil (12), et **en ce qu'**un élément de support (18) accrochant par l'arrière la deuxième partie (17) du canal de vis (15) sur le deuxième élément de profil (12) est réalisé sur le premier élément de profil (11) en face de la première partie (16) du canal de vis (15).

2. Raccordement de profil selon la revendication 1, **caractérisé en ce qu'**une moitié du canal de vis en deux parties (15) est formée sur chacun des deux éléments de profil (11), (12).

3. Raccordement de profil selon la revendication 1 ou 2, **caractérisé en ce qu'**un évidement (20) est formé sur la face intérieure (19) de l'élément de support (18) pour recevoir un ergot d'encliquetage (22) disposé sur la face (21) de la deuxième partie (17) du canal de vis (15) se trouvant en liaison active avec celle-ci.

4. Raccordement de profil selon l'une quelconque des revendications 1 à 3, **caractérisé en ce que** l'élément de support (18) est disposé légèrement en oblique par rapport à l'axe central (23) du canal de vis (15).

5. Raccordement de profil selon la revendication 4, **caractérisé en ce que** l'obliquité de 1'élément de support (18) par rapport à l'axe central (23) du canal de vis (15) vaut environ 5°.

6. Raccordement de profil selon l'une quelconque des revendications 1 à 5, **caractérisé en ce que** le canal de vis en deux parties (15) est réalisé en vue d'une pénétration sensiblement totale de la vis (14).

7. Raccordement de profil selon l'une quelconque des revendications 1 à 6, **caractérisé en ce que** l'assemblage vissé (13) peut être vissé à droite ou à gauche.
